# EUROPÄISCHE PATENTANMELDUNG

(11) **EP 3 513 884 A1**
(43) Veröffentlichungstag der Anmeldung: **24.07.2019**
(21) Anmeldenummer: 19152935.3
(22) Anmeldetag: 22.01.2019
(51) Int. Cl.: B08B 9/027, B08B 9/032, B67D 1/07

(54) **VERWENDUNG EINER VORRICHTUNG ZUM KARBONISIEREN VON GETRÄNKEN; VERFAHREN ZUM KARBONISIEREN EINER FLÜSSIGKEIT; DIE SICH WÄHREND EINES REINIGUNGSPROZESSES EINER PROZESSANLAGE IN EINER VORRICHTUNG ZUM KARBONISIEREN VON GETRÄNKEN BEFINDET UND VORRICHTUNG DAZU**

(30) Priorität: 22.01.2018 DE 102018200906
(71) Anmelder: KRONES Aktiengesellschaft, 93073 Neutraubling (DE)
(72) Erfinder: Engel, Erwin, 93073 Neutraubling (DE); Mayerhofer, Andreas, 93073 Neutraubling (DE)
(74) Vertreter: Grünecker Patent- und Rechtsanwälte PartG mbB

(57) **Zusammenfassung**

Die Erfindung betrifft eine Verwendung einer Vorrichtung zum Karbonisieren von Getränken in einer Prozessanlage für die Getränke, wobei die Vorrichtung einen Karbonisierer umfasst und verwendet wird, um während eines Reinigungsprozesses der Prozessanlage in der Vorrichtung befindlichen Flüssigkeit mittels des Karbonisierers Kohlenstoffdioxid beizusetzen. Zudem betrifft die Erfindung ein Verfahren zum Karbonisieren einer Flüssigkeit, die sich während eines Reinigungsprozesses einer Prozessanlage in einer Vorrichtung zum Karbonisieren von Getränken in der Prozessanlage für die Getränke befindet, wobei die Vorrichtung einen Karbonisierer umfasst, durch Beisetzen von Kohlenstoffdioxid zu der Flüssigkeit mittels des Karbonisierers während des Reinigungsprozesses. Weiter betrifft die Erfindung eine Vorrichtung zum Karbonisieren von Getränken in einer Prozessanlage für Getränke, wobei die Vorrichtung einen Karbonisierer und eine Steuerungsvorrichtung zum Steuern des Karbonisierers umfasst und dazu ausgelegt ist das erfindungsgemäße Verfahren auszuführen.

## Beschreibung

Die Erfindung betrifft eine Verwendung einer Vorrichtung zum Karbonisieren von Getränken in einer Prozessanlage für Getränke, die einen Karbonisierer umfasst, nach Anspruch 1, ein Verfahren zum Karbonisieren einer Flüssigkeit, die sich während eines Reinigungsprozesses einer Prozessanlage einer Vorrichtung zum Karbonisieren von Getränken befindet nach Anspruch 7 und eine Vorrichtung dafür nach Anspruch 12.

### Stand der Technik

Das Reinigungsprinzip CIP ("Cleaning in Place", zu deutsch "Reinigung am Platz") gibt es seit rund 50 Jahren. Es kommt bei der Reinigung verfahrenstechnischer Anlagen zum Einsatz, vornehmlich in Branchen mit besonders kritischen Hygieneanforderungen wie der Pharmazeutik oder auch der Lebensmittel- und Getränkeindustrie. Dabei werden Maschinen, Kessel, Reaktionsgefäße, Rohrleitungen etc. unter Einsatz von Chemikalien, Hitze und Wasser gereinigt - ohne diese zerlegen zu müssen. Die eingesetzten Substanzen und Reinigungsrückstände werden über den Abfluss entsorgt oder recycelt.

Häufig verwendete Reinigungsmittel in CIP-Systemen sind z. B. Natronlauge sowie Phosphor- und Salpetersäure, Natriumhypochloritlösung und Peressigsäure (PES). Natriumlauge löst Fettstoffe an, die sich anschließend mechanisch entfernen lassen. Natriumhypochloritlösung ist sehr kostengünstig und wird hauptsächlich zur Desinfektion eingesetzt. PES ist eine sogenannte Gleichgewichtsmischung aus Essigsäure und Wasserstoffperoxid. Es handelt sich um ein sehr starkes Oxidationsmittel.

Bei einer typischen CIP-Reinigung wird im Rahmen einer Laugenreinigung zunächst 10 bis 15 Minuten Kaltwasser zum Ausspülen von Produktresten verwendet, dann findet 20 bis 30 Minuten eine Laugenreinigung bei > 80°C statt, dann 15 - 20 Minuten eine Heißwasserreinigung bei > 80°C und zum Abkühlen der Anlage wird 10 bis 15 Minuten Kaltwasser eingebracht. Derzeit wird Heißwasser verwendet, um die Laugenreste bei der CIP-Reinigung auszuspülen und so lang auf den Gully zu fahren, bis im Rücklauf, abhängig vom Leitwert, die Mischphase beendet ist und die Heißwasserkreislaufphase beginnt.

### Aufgabe

Die Aufgabe der Erfindung besteht darin, eine Vorrichtung zum Karbonisieren von Getränken in einer Prozessanlage für Getränke, die einen Karbonisierer umfasst, während eines Reinigungsprozesses derart zu verwenden, dass ein minimierter Verbrauch von Heiß- bzw. Kaltwasser, Zeit und Energie im Allgemeinen ermöglicht wird.

### Lösung

Diese Aufgabe wird erfindungsgemäß durch die Verwendung nach Anspruch 1, das Verfahren nach Anspruch 7 und die Vorrichtung 12 gelöst. Bevorzugte Ausführungsformen und vorteilhafte Weiterbildungen sind in den Unteransprüchen offenbart.

In der erfindungsgemäßen Verwendung einer Vorrichtung zum Karbonisieren von Getränken in einer Prozessanlage für die Getränke, wobei die Vorrichtung einen Karbonisierer umfasst, wird die Vorrichtung verwendet, um während eines Reinigungsprozesses der Prozessanlage in der Vorrichtung befindlichen Flüssigkeit mittels des Karbonisierers Kohlenstoffdioxid (CO₂) bzw. Kohlenstoffdioxid-haltiges Gas beizusetzen. Die Prozessanlage kann weiterhin eine Abfüllvorrichtung umfassen, in welcher die im normalen Betrieb der Prozessanlage behandelten Produkte in geeignete Behältnisse abgefüllt werden können. Unter einem Reinigungsprozess können auch eine oder mehrere Sterilisationsprozesse verstanden werden.

Für die Durchführung des Reinigungsprozesses kann die Flüssigkeit in einen Zugang der Vorrichtung eingebracht und nach Durchlaufen der Vorrichtung durch einen Ausgang der Vorrichtung ausgebracht werden. Zu verschiedenen Zeitpunkten des Reinigungsprozesses kann vorgesehen sein, jeweils verschiedene Flüssigkeiten in die Vorrichtung einzubringen. Beispielsweise kann zu Beginn des Reinigungsprozesses zu einer Zeit t1 Kaltwasser eingebracht werden, um Getränkereste aus der Vorrichtung auszuspülen, danach kann zu einer Zeit t2 dazu übergegangen werden, Reinigungsmedium oder Heißwasser in die Vorrichtung einzubringen. Somit können während einer Zeitdauer eine erste Flüssigkeit (Kaltwasser), eine zweite Flüssigkeit (Reinigungsmedium/Heißwasser) sowie eine Mischphase der ersten und zweiten Flüssigkeit in der Vorrichtung vorhanden sein. Zu einer dritten Zeit t3 kann erneut Kaltwasser in die Vorrichtung eingebracht werden, um das Reinigungsmedium/Heißwasser und Mischphasen von Reinigungsmedium und Kaltwasser bzw. Heißwasser und Kaltwasser auszuspielen.

Der in der Vorrichtung befindlichen Flüssigkeit kann mittels des Karbonisierers CO₂ beigesetzt werden, wenn die Flüssigkeit einen Wirkungsbereich des Karbonisierers passiert. Somit ist die Flüssigkeit stromauf des Karbonisierers noch nicht karbonisiert, d.h., ihr wurde kein CO₂ beigesetzt, und die Flüssigkeit stromab des Karbonisierers ist karbonisiert, d.h., ihr wurde CO₂ mittels des Karbonisierers beigesetzt.

Umfasst die Vorrichtung beispielsweise auch eine Kurzzeiterhitzungseinrichtung (KZE) mit Wärmetauschern, so kann durch das Beisetzen von CO₂ zu der Flüssigkeit während eines Sterilisationsschritts mit Heißwasser vermieden werden, dass sich an den behandelten Wärmetauschern Kalkbeläge absetzen, die sich dann in Getränken, die mit der Vorrichtung behandelt werden, wieder finden können. Alternativ kann beispielsweise vorgesehen sein, eine KZE mit einem separaten, weiteren Karbonisierer auszustatten, der während eines Reinigungsprozesses in Betrieb genommen werden kann.

Das Beisetzen von Kohlenstoffdioxid zu der Flüssigkeit während des Sterilisationsschritts mit Heißwasser ist besonders dann relevant, wenn für die Heißwassersterilisation Wasser mit einer hohen Härte verwendet wird. Dies führt dazu, dass bei einem Aufheizen auf eine Sterilisationstemperatur und während der Heißwassersterilisation Kalk (im Wesentlichen Calciumcarbonat und Magnesiumkalk) ausfällt und beispielsweise Beläge ausbildet. Diese Beläge können sich dann später unerwünschter Weise im Produkt wiederfinden. Dies kann bei säurearmen Produkten, wie z.B. Stillwasser, der Fall. Um dies zu verhindern, wird dem Wasser CO₂ zugegeben. Dadurch bleiben die Härtebildner in Lösung, und es findet keine Kalkausfällung statt.

Unter einem Karbonisier können aus dem Stand der Technik bekannte Vorrichtungen verwendet werden, mit denen eine Flüssigkeit mit einem CO₂-haltigem Gas in Kontakt gebracht werden kann, so dass sich das CO₂-haltige Gas zumindest teilweise in der Flüssigkeit löst. Beispielsweise können Düsen, wie Venturi-Düsen, verwendet werden.

Der Reinigungsprozess kann eine CIP-Reinigung umfassen. Der Reinigungsprozess kann Prozessschritte zum Reinigen der Vorrichtung und/oder zur Sterilisation der Vorrichtung umfassen.

Es kann eine Steuerung des Karbonisierers erfolgen, um das CO₂ der Flüssigkeit in einem Bereich von 0 g/l bis 1g/l beizusetzen (g/l entspricht Gramm pro Liter; 0 g/l stellt die untere, nicht eingeschlossene Bereichsgrenze dar), vorzugsweise in einem Bereich von 0,1 g/l bis 0,5 g/l. Auch Mengen größer als 1 g/l CO₂ können beigesetzt werden.

Da diese zu dosierende Menge an CO₂ für übliche Karbonisierungssysteme als vergleichbar klein angesehen werden kann, kann vorgesehen sein, dass die Steuerung des Karbonisierers eine getaktete Besetzung des CO₂ steuert. Die Steuerung kann mittels einer Steuervorrichtung vorgenommen werden, die von der Vorrichtung umfasst sein kann.

Die Flüssigkeit kann Kaltwasser mit einer Temperatur von 8°C bis 20°C sein, wobei nach Beisetzen des Kohlenstoffdioxids zu dem Kaltwasser mittels des Karbonisierers, das Kaltwasser in der Vorrichtung auf eine Heißwassertemperatur von 80°C bis 98°C erwärmt wird zum Erzeugen von Heißwasser, wobei für ein Ausspülen des Heißwassers aus der Vorrichtung Kaltwasser mit einer Temperatur von 8°C bis 20°C in die Vorrichtung eingebracht wird.

Zur Erzeugung des Heißwassers kann Kaltwasser in der Vorrichtung durch in Strömungsrichtung vor- und/oder nachgeschaltete Anlagen auf die erforderliche Heißwassertemperatur erhitzt werden. Vor- und/oder nachgeschaltete Anlagen können beispielsweise Kurzzeiterhitzungsanlagen darstellen. Vorteilhafterweise erfolgt die Heißwassersterilisation der Vorrichtung bzw. der vor- und nachgeschalteten Anlagen in einem Kreislauf. Hierdurch können erhebliche Mengen an Heißwasser gespart werden. Die vor- und/oder nachgeschalteten Anlagen können vorzugsweise ein Teil der Prozessanlage sein. Es kann auch vorgesehen sein, dass die vor- und/oder nachgeschalteten Anlagen ein Teil der Vorrichtung sind.

Dem Heißwasser kann mittels des Karbonisierers Kohlenstoffdioxid beigesetzt werden.

Alternative kann Kaltwasser in die Vorrichtung eingebracht und in der Vorrichtung auf eine Heißwassertemperatur von 80°C bis 98°C erwärmt werden zum Erzeugen von Heißwasser, wobei die Flüssigkeit Heißwasser ist, und wobei für ein Ausspülen des Heißwassers aus der Vorrichtung Kaltwasser mit einer Temperatur von 8°C bis 20°C in die Vorrichtung eingebracht wird

Die in der Vorrichtung befindliche Flüssigkeit kann ein Reinigungsmedium sein und für ein Ausspülen des Reinigungsmediums kann Kaltwasser mit einer Temperatur von 8°C bis 20°C in die Vorrichtung eingebracht und dem Kaltwasser mittels des Karbonisierers CO₂ beigesetzt werden.

Durch das Beisetzen von CO₂ zu dem Wasser (H₂O) kann das Ausspülen von Laugeresten, wie Natriumhydroxyd (NaOH), z.B. nach einer vorangegangenen Laugenreinigung, verbessert werden. Durch die chemische Reaktion

2NaOH + CO₂ + H₂O → Na₂CO₃ + 2H₂O,

findet eine Neutralisierung der Lauge durch das mit CO₂ versetzte Wasser statt. Dabei bildet sich gut lösliches Natriumcarbonat (Na₂CO₃), welches sehr leicht ausgespült werden kann. Somit kann ein im Allgemeinen erforderlicher Heißwasserschritt herkömmlicher Reinigungsprozesse zum Ausspülen des Reinigungsmediums entfallen und auch ein abschließender Kaltwasserschritt (auch zur Abkühlung nach einem möglichen Heißwasserschritt) kann zeitlich verkürzt werden. Bei der Verwendung von Kaltwasser sind nur natürlich vorkommende Wasserhärtebildner vorhanden, die aufgrund der Kaltwassertemperatur nicht ausfallen.

Beispielsweise kann vorgesehen sein, für eine vorgegebene Zeitdauer Kaltwasser in die Vorrichtung einzubringen und erst nach dieser Zeitdauer die Karbonisierung des Kaltwassers zu starten. Die Zeitdauer kann 30 Sekunden betragen.

Die in der Vorrichtung befindliche Flüssigkeit kann Heißwasser mit einer Temperatur von 80°C bis 98°C sein. Heißwasser kann für eine Heißwassersterilisation der Vorrichtung sowie in Strömungsrichtung vor- und nachgeschalteter Anlagen verwendet werden. Da bei der Verwendung von Heißwasser Wasserhärtebildner ausfallen können, ist es vorteilhaft, dem Heißwasser CO₂ beizusetzen, da die Härtebildner dann trotzdem in Lösung gehalten werden können und sich so nicht an Materialien der Vorrichtung niederschlagen, was zu einer Beeinträchtigung des Getränks führen könnte. Das Ausspülen des Heißwassers mittels Kaltwasser kann die gleichen Vorteile wie das Ausspülen des Reinigungsmediums mittels Kaltwasser aufweisen. Für ein Ausspülen des Heißwassers kann Kaltwasser mit einer Temperatur von 8°C bis 20°C in die Vorrichtung eingebracht werden.

In einem Verfahren zum Karbonisieren einer Flüssigkeit, die sich während eines Reinigungsprozesses einer Vorrichtung zum Karbonisieren von Getränken in einer Prozessanlage für die Getränke in der Vorrichtung befindet, wobei die Vorrichtung einen Karbonisierer umfasst, erfolgt ein Beisetzen von CO₂ zu der Flüssigkeit mittels des Karbonisierers während des Reinigungsprozesses. Die Vorrichtung zum Karbonisieren kann derjenigen entsprechen, die für die oben erwähnte Verwendung vorgesehen ist.

Das Verfahren kann weiter ein Steuern des Karbonisierers umfassen, um der Flüssigkeit das CO₂ in einem Bereich von 0 g/l bis 1g/l beizusetzen, vorzugsweise in einem Bereich von 0,1 g/l bis 0,5 g/l.

Das Steuern des Karbonisierers kann eine getaktete Besetzung des CO₂ umfassen.

Die Flüssigkeit kann ein Reinigungsmedium sein und das Verfahren kann weiter ein Einbringen von Kaltwasser mit einer Temperatur von 8°C bis 20°C zum Ausspülen des Reinigungsmediums umfassen. Das Reinigungsmedium kann eine Lauge sein.

Die Flüssigkeit kann Heißwasser mit einer Temperatur von 80°C bis 98°C sein und das Verfahren kann weiter ein Einbringen von Kaltwasser mit einer Temperatur von 8°C bis 20°C zum Ausspülen des Heißwassers umfassen.

Das Verfahren kann weiter ein Beisetzen von CO₂ zu dem Kaltwasser mittels des Karbonisierers umfassen. Das Verfahren kann weiter ein Beisetzen von CO₂ zu dem Heißwasser mittels des Karbonisierers umfassen.

Weiter ist eine Vorrichtung zum Karbonisieren von Getränken in einer Prozessanlage für die Getränke vorgesehen, wobei die Vorrichtung einen Karbonisierer und eine Steuerungsvorrichtung zum Steuern des Karbonisierers umfasst und dazu ausgelegt ist das Verfahren, wie oben oder weiter unten beschrieben, auszuführen. Die Vorrichtung zum Karbonisieren kann derjenigen entsprechen, die für die oben erwähnte Verwendung vorgesehen ist.

Die Steuerungsvorrichtung kann dazu ausgebildet sein, den Karbonisierer zu steuern, um das CO₂ in einem Bereich von 0 g/l bis 1g/l beizusetzen, vorzugsweise in einem Bereich von 0,1 g/l bis 0,5 g/l.

Die Steuerungsvorrichtung kann eine getaktete Beisetzung des CO₂ steuern.

Die beigefügten Figuren stellen beispielhaft zum besseren Verständnis und zur Veranschaulichung Aspekte der Erfindung dar. Es zeigt:
- Figur 1: ein Flussdiagramm eines ersten Verfahrens zum Karbonisieren einer Flüssigkeit, die sich während eines Reinigungsprozesses einer Vorrichtung zum Karbonisieren von Getränken in einer Prozessanlage für die Getränke, wobei die Vorrichtung einen Karbonisierer umfasst, in der Vorrichtung befindet,
- Figur 2A: ein Flussdiagramm eines zweiten Verfahrens zum Karbonisieren einer Flüssigkeit bei einer Heißwassersterilisation der Vorrichtung zum Karbonisieren,
- Figur 2B: ein Flussdiagramm eines dritten Verfahrens zum Karbonisieren einer Flüssigkeit bei einer Heißwassersterilisation der Vorrichtung zum Karbonisieren und
- Figur 2C: ein Flussdiagramm eines vierten Verfahrens zum Karbonisieren einer Flüssigkeit bei einer Heißwassersterilisation der Vorrichtung zum Karbonisieren.

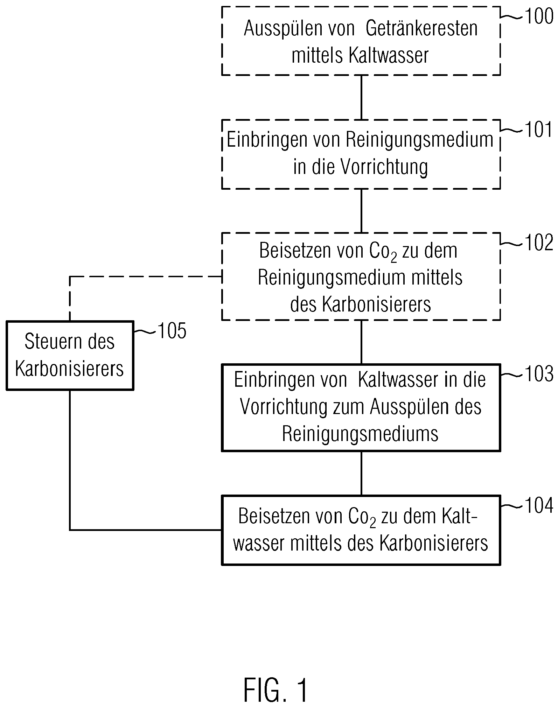

Figur 1 zeigt ein Flussdiagramm eines ersten Verfahrens zum Karbonisieren einer Flüssigkeit, die sich während eines Reinigungsprozesses einer Vorrichtung zum Karbonisieren von Getränken in einer Prozessanlage für die Getränke in der Vorrichtung befindet, wobei die Vorrichtung einen Karbonisierer umfasst.

Im Schritt 100 kann ein Ausspülen von Getränkeresten aus der Vorrichtung mittels Kaltwasser erfolgen. Das Kaltwasser kann in die Vorrichtung eingebracht und durch sie hindurchgeleitet werden. Danach kann das Kaltwasser, das dann Getränkereste umfassen kann, in den Gully gefahren werden.

Im Schritt 101 kann ein Einbringen von Reinigungsmedium in die Vorrichtung erfolgen. Vorzugsweise ist das Reinigungsmedium eine Lauge.

Die Schritte 100 und 101 sind optional, da das Verfahren zum Karbonisieren der Flüssigkeit nach dem Einbringen der Flüssigkeit beginnen kann.

Im Schritt 102 kann ein Beisetzen von Kohlendioxid (CO₂) zu dem Reinigungsmittel mittels des Karbonisierers der Vorrichtung erfolgen. Das Beisetzen des CO₂ kann durch ein Steuern des Karbonisierers im Schritt 105 gesteuert werden.

Im Schritt 103 erfolgt ein Einbringen von Kaltwasser in die Vorrichtung zum Ausspülen des Reinigungsmediums.

Im Schritt 104 erfolgt ein Beisetzen von CO₂ zu dem Kaltwasser mittels des Karbonisierers der Vorrichtung. Das Beisetzen des CO₂ kann durch ein Steuern des Karbonisierers im Schritt 105 gesteuert werden.

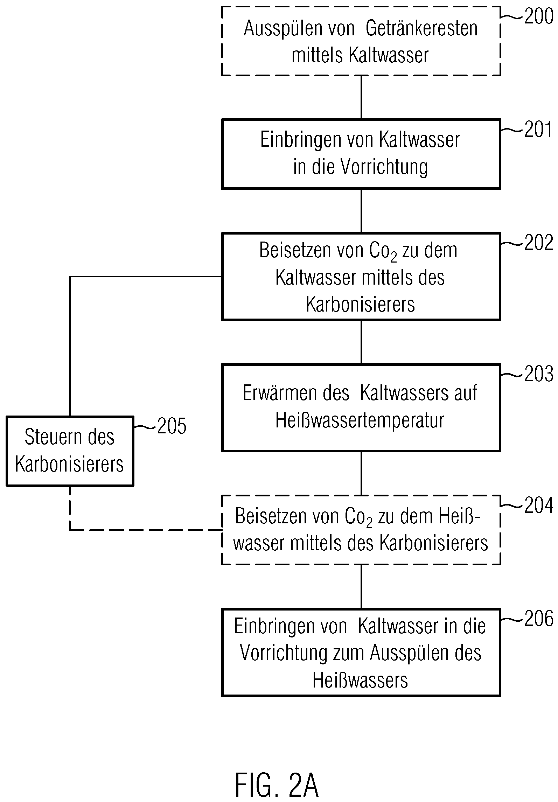

Figur 2A zeigt ein Flussdiagramm eines zweiten Verfahrens zum Karbonisieren einer Flüssigkeit bei einer Heißwassersterilisation der Vorrichtung zum Karbonisieren wobei sich die Flüssigkeit während eines Reinigungsprozesses einer Vorrichtung zum Karbonisieren von Getränken in einer Prozessanlage für die Getränke, wobei die Vorrichtung einen Karbonisierer umfasst, in der Vorrichtung befindet.

Im Schritt 200 kann optional ein Ausspülen von Getränkeresten aus der Vorrichtung mittels Kaltwasser erfolgen. Das Kaltwasser kann in die Vorrichtung eingebracht und durch sie hindurchgeleitet werden. Danach kann das Kaltwasser, das dann Getränkereste umfassen kann, in den Gully gefahren werden.

Im Schritt 201 erfolgt ein Einbringen von Kaltwasser in die Vorrichtung.

Im Schritt 202 erfolgt ein Beisetzen von CO₂ zu dem Kaltwasser mittels des Karbonisierers der Vorrichtung. Das Beisetzen des CO₂ kann durch ein Steuern des Karbonisierers im Schritt 205 gesteuert werden.

Im Schritt 203 erfolgt ein Erwärmen des Kaltwassers auf eine Heißwassertemperatur, beispielsweise in einem Bereich von 80°C bis 98°C. Das Kaltwasser kann zum Erwärmen bis auf die Heißwassertemperatur im Kreislauf durch die Vorrichtung und ggf. vor- und/oder nachgeschaltete Anlagenteile geführt werden.

Im Schritt 204 kann bedarfsweise ein Beisetzen von CO₂ zu dem Heißwasser mittels des Karbonisierers der Vorrichtung erfolgen. Das Beisetzen des CO₂ kann durch ein Steuern des Karbonisierers im Schritt 205 gesteuert werden.

Im Schritt 206 erfolgt ein Einbringen von Kaltwasser in die Vorrichtung zum Ausspülen des Heißwassers aus der Vorrichtung.

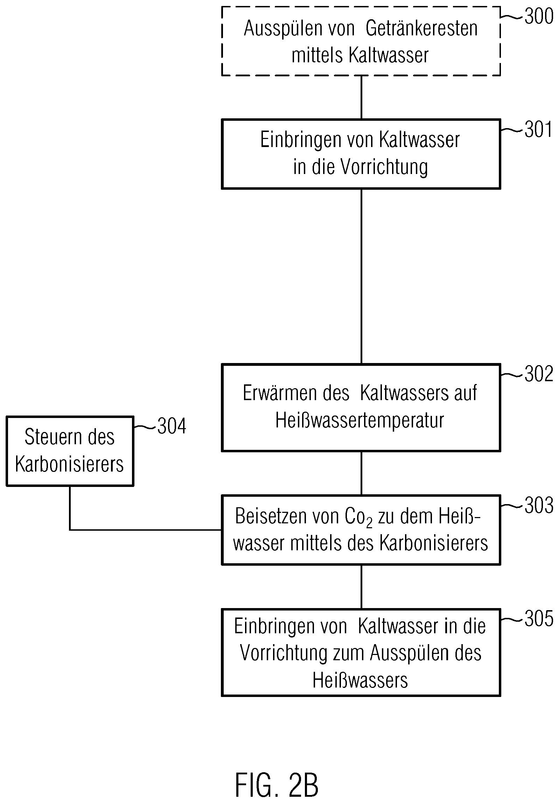

Figur 2B zeigt ein Flussdiagramm eines dritten Verfahrens zum Karbonisieren einer Flüssigkeit bei einer Heißwassersterilisation der Vorrichtung zum Karbonisieren wobei sich die Flüssigkeit während eines Reinigungsprozesses einer Vorrichtung zum Karbonisieren von Getränken in einer Prozessanlage für die Getränke, wobei die Vorrichtung einen Karbonisierer umfasst, in der Vorrichtung befindet.

Im Schritt 300 kann optional ein Ausspülen von Getränkeresten aus der Vorrichtung mittels Kaltwasser erfolgen. Das Kaltwasser kann in die Vorrichtung eingebracht und durch sie hindurchgeleitet werden. Danach kann das Kaltwasser, das dann Getränkereste umfassen kann, in den Gully gefahren werden.

Im Schritt 301 erfolgt ein Einbringen von Kaltwasser in die Vorrichtung.

Im Schritt 302 erfolgt ein Erwärmen des Kaltwassers auf eine Heißwassertemperatur, beispielsweise in einem Bereich von 80°C bis 98°C. Das Kaltwasser kann zum Erwärmen bis auf die Heißwassertemperatur im Kreislauf durch die Vorrichtung und ggf. vor- und/oder nachgeschaltete Anlagenteile geführt werden.

Im Schritt 303 erfolgt ein Beisetzen von CO₂ zu dem Heißwasser mittels des Karbonisierers der Vorrichtung. Das Beisetzen des CO₂ kann durch ein Steuern des Karbonisierers im Schritt 304 gesteuert werden.

Im Schritt 305 erfolgt ein Einbringen von Kaltwasser in die Vorrichtung zum Ausspülen des Heißwassers aus der Vorrichtung.

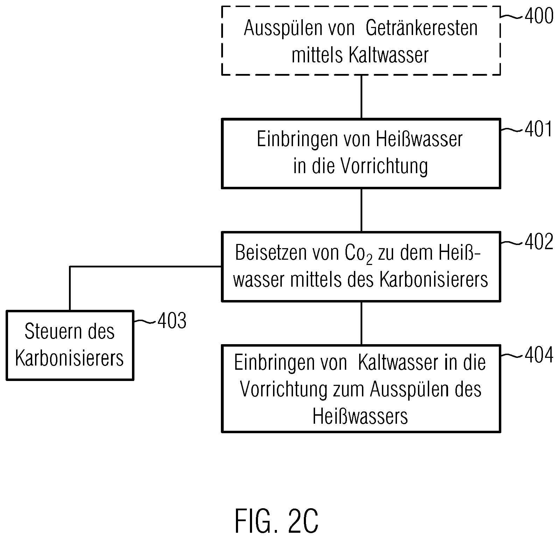

Figur 2C zeigt ein Flussdiagramm eines vierten Verfahrens zum Karbonisieren einer Flüssigkeit bei einer Heißwassersterilisation der Vorrichtung zum Karbonisieren wobei sich die Flüssigkeit während eines Reinigungsprozesses einer Vorrichtung zum Karbonisieren von Getränken in einer Prozessanlage für die Getränke, wobei die Vorrichtung einen Karbonisierer umfasst, in der Vorrichtung befindet.

Im Schritt 400 kann optional ein Ausspülen von Getränkeresten aus der Vorrichtung mittels Kaltwasser erfolgen. Das Kaltwasser kann in die Vorrichtung eingebracht und durch sie hindurchgeleitet werden. Danach kann das Kaltwasser, das dann Getränkereste umfassen kann, in den Gully gefahren werden.

Im Schritt 401 erfolgt ein Einbringen von Heißwasser in die Vorrichtung.

Im Schritt 402 erfolgt ein Beisetzen von CO₂ zu dem Heißwasser mittels des Karbonisierers der Vorrichtung. Das Beisetzen des CO₂ kann durch ein Steuern des Karbonisierers im Schritt 403 gesteuert werden.

Im Schritt 404 erfolgt ein Einbringen von Kaltwasser in die Vorrichtung zum Ausspülen des Heißwassers aus der Vorrichtung.

## Patentansprüche

1. Verwendung einer Vorrichtung zum Karbonisieren von Getränken in einer Prozessanlage für die Getränke, wobei die Vorrichtung einen Karbonisierer umfasst,
**dadurch gekennzeichnet, dass**
die Vorrichtung verwendet wird, um während eines Reinigungsprozesses der Prozessanlage in der Vorrichtung befindlichen Flüssigkeit mittels des Karbonisierers Kohlenstoffdioxid beizusetzen.

2. Die Verwendung nach Anspruch 1, wobei eine Steuerung des Karbonisierers erfolgt, um der Flüssigkeit das Kohlenstoffdioxid in einem Bereich von 0 g/l bis 1g/l beizusetzen, vorzugsweise in einem Bereich von 0,1 g/l bis 0,5 g/l.

3. Die Verwendung nach Anspruch 2, wobei die Steuerung des Karbonisierers eine getaktete Beisetzung des Kohlenstoffdioxids steuert.

4. Die Verwendung nach einem der Ansprüche 1 bis 3, wobei die Flüssigkeit Kaltwasser mit einer Temperatur von 8°C bis 20°C ist, wobei nach Beisetzen des Kohlenstoffdioxids zu dem Kaltwasser mittels des Karbonisierers, das Kaltwasser in der Vorrichtung auf eine Heißwassertemperatur von 80°C bis 98°C erwärmt wird zum Erzeugen von Heißwasser, wobei für ein Ausspülen des Heißwassers aus der Vorrichtung Kaltwasser mit einer Temperatur von 8°C bis 20°C in die Vorrichtung eingebracht wird.

5. Die Verwendung nach Anspruch 4, wobei dem Heißwasser mittels des Karbonisierers Kohlenstoffdioxid beigesetzt wird.

6. Die Verwendung nach einem der Ansprüche 1 bis 3, wobei die Flüssigkeit ein Reinigungsmedium ist und wobei für ein Ausspülen des Reinigungsmediums Kaltwasser mit einer Temperatur von 8°C bis 20°C in die Vorrichtung eingebracht und dem Kaltwasser mittels des Karbonisierers Kohlenstoffdioxid beigesetzt wird.
mit einer Temperatur von 8°C bis 20°C in die Vorrichtung eingebracht und dem Kaltwasser mittels des Karbonisierers Kohlendioxid beigesetzt wird.

7. Verfahren zum Karbonisieren einer Flüssigkeit, die sich während eines Reinigungsprozesses einer Prozessanlage in einer Vorrichtung zum Karbonisieren von Getränken in der Prozessanlage für die Getränke befindet, wobei die Vorrichtung einen Karbonisierer umfasst, wobei das Verfahren umfasst:
Beisetzen (102, 202) von Kohlenstoffdioxid zu der Flüssigkeit mittels des Karbonisierers während des Reinigungsprozesses.

8. Das Verfahren nach Anspruch 7, weiter umfassend Steuern (105, 205) des Karbonisierers, um der Flüssigkeit das Kohlenstoffdioxid in einem Bereich von 0 g/l bis 1g/l beizusetzen, vorzugsweise in einem Bereich von 0,1 g/l bis 0,5 g/l, wobei vorzugsweise das Steuern des Karbonisierers eine getaktete Beisetzung des Kohlenstoffdioxids umfasst.

9. Das Verfahren nach einem der Ansprüche 7 oder 8, wobei die Flüssigkeit Kaltwasser mit einer Temperatur von 8°C bis 20°C ist, wobei nach Beisetzen des Kohlenstoffdioxids zu dem Kaltwasser mittels des Karbonisierers, das Kaltwasser in der Vorrichtung auf eine Heißwassertemperatur von 80°C bis 98°C erwärmt wird zum Erzeugen von Heißwasser, wobei für ein Ausspülen des Heißwassers aus der Vorrichtung Kaltwasser mit einer Temperatur von 8°C bis 20°C in die Vorrichtung eingebracht wird.

10. Das Verfahren nach Anspruch 9, wobei dem Heißwasser mittels des Karbonisierers Kohlenstoffdioxid beigesetzt wird.

11. Das Verfahren nach Anspruch 7 oder 8, wobei die Flüssigkeit ein Reinigungsmedium ist und wobei das Verfahren weiter ein Einbringen (103) von Kaltwasser mit einer Temperatur von 8°C bis 20°C zum Ausspülen des Reinigungsmediums umfasst.

12. Vorrichtung zum Karbonisieren von Getränken in einer Prozessanlage für die Getränke, wobei die Vorrichtung einen Karbonisierer umfasst und dazu ausgelegt ist das Verfahren nach einem der Ansprüche 7 bis 11 auszuführen, wobei die Vorrichtung eine Steuerungsvorrichtung zum Steuern des Karbonisierers umfasst.

13. Die Vorrichtung nach Anspruch 12, wobei die Steuerungsvorrichtung dazu ausgebildet ist, den Karbonisierer zu steuern, um das Kohlenstoffdioxid in einem Bereich von 0 g/l bis 1g/l beizusetzen, vorzugsweise in einem Bereich von 0,1 g/l bis 0,5 g/l, wobei vorzugsweise die Steuerungsvorrichtung eine getaktete Beisetzung des Kohlenstoffdioxids steuert.
